# EUROPEAN PATENT APPLICATION

(11) **EP 1 607 827 A2**
(43) Date of publication of application: **21.12.2005**
(21) Application number: 05253665.3
(22) Date of filing: 14.06.2005
(51) Int. Cl.: G06F 1/00

(54) **License evaluation apparatus, license evaluation method and computer program therefor**

(30) Priority: 16.06.2004 JP 2004178347
(71) Applicant: SONY CORPORATION, Tokyo (JP)
(72) Inventor: Saeki, Keiko, c/o Sony Corporation, Tokyo (JP); Sakamoto, Takahiro, c/o Sony Corporation, Tokyo (JP); Goto, Norifumi, c/o Sony Corporation, Tokyo (JP); Nagano, Motohiko, c/o Sony Corporation, Tokyo (JP)
(74) Representative: Mills, Julia

(57) **Abstract**

A license evaluation apparatus and method is disclosed which can specify the substance and the position of an error only with a simple description without the necessity to analyze the error in an ex post fact fashion. A data storage section stores licenses, and a content selection section selects a content. A license extraction section extracts the license from within the data storage section. A conditional expression decision section reads a conditional expression in use condition information of the license and an error code annexed in advance to the conditional expression and deciding whether or not the conditional expression is satisfied. If the conditional expression is not satisfied, an error code retaining section retains the error code. An application to which the error code is returned can specify the error without analyzing the error in an ex post fact fashion.

## Description

The present invention contains subject matter related to Japanese Patent Application JP 2004-178347 filed in the Japanese Patent Office on June 16, 2004, the entire contents of which being incorporated herein by reference.

This invention relates to the field of license evaluation apparatus, license evaluation methods and computer programs therefor by which processing of a content is carried out based on a license.

When it is tried to utilize a digital content such as a music content or a video content, it is necessary to acquire the content and a license of the content. Recently, a content utilization method is carried out wherein contents and licenses are managed independently of each other. Accordingly, a digital content to be utilized is encrypted on the content distribution side and is decrypted based on a license acquired separately. In such a situation as just described, any digital content can be distributed freely, and utilization of the content is managed based on the separate license.

A technique is known and disclosed, for example, in Japanese Patent Laid-Open No. 2004-308440 (hereinafter referred to as Patent Document 1) wherein an information processing apparatus to which a content and a license are provided independently of each other performs a license process readily and safely even where variations, a purchasing procedure and so forth of a license are complicated. In the technique of Patent Document 1, a complicated license is divided into different services, and a license is defined individually for each of the services.

However, the information processing apparatus described above performs, in decision of whether or not a license use limitation condition is satisfied, only a decision of whether or not the license use limitation condition is satisfied, but cannot particularly specify which use limitation condition is not satisfied. Further, although it is possible, when dissatisfaction of the use limitation condition is detected, to separately use error tracing software to trace the error, the process for specifying the error is complicated.

For example, when it is tried to limit the period based on a license, although the application can decide that the use limitation condition is not satisfied, it cannot recognize whether the period is not reached as yet or whether the period has expired already. Further, where a plurality of use limitation conditions are not satisfied, the application cannot specify the individual errors, and this gives rise to a trouble in handling of the content in the application layer. If it is tried to perform such specification of an error in a program, then modification to the program is required every time an evaluation expression is added.

Embodiments of the present invention seek to provide a novel and improved license evaluation apparatus and method and computer program therefor by which the substance and the position of an error can be specified only with a simple description without the necessity to analyze the error in an ex post fact fashion.

A first aspect of the present invention, provides a license evaluation apparatus, comprising a data storage section configured to store licenses of contents, a content selection section configured to select one of the contents, a license extraction section configured to extract that one of the licenses which corresponds to the selected content from within the data storage section, a conditional expression decision section configured to read a conditional expression in use condition information of the license and an error code annexed in advance to the conditional expression and deciding whether or not the conditional expression is satisfied, a content processing section configured to process the content if the conditional expression is satisfied, and an error code retaining section configured to retain the error code if the conditional expression is not satisfied.

The license evaluation apparatus may be a personal computer, a PDA (Personal Digital Assistant), a mobile telephone set, a portable audio player, a home game machine, an information appliance or the like.

The license is the right for example to have a decrypting key for processing (such as reproduction, checkout or the like) the content or data describing the right, and the use condition information is a description which represents a condition and so forth relating to use of the content described in the license in the form of a list. A use limitation condition described in the use condition information includes maximum values of the reproduction time, reproduction period, number of times of reproduction, number of times of permission of copying and number of times of checkout of a contents, and whether or not recording on a recording medium is permitted, whether or not movement of the license is permitted, whether or not there is use log duty, and so forth.

The license evaluation apparatus can be applied to a system wherein contents and licenses are managed independently of each other, and evaluates a conditional expression described in the use condition information of a license to decide whether or not the license exists. More particularly, the conditional expression decision section successively reads in descriptions of a conditional expression of a license from the use condition information and recognizes the conditional expression to evaluate the limitation condition of the license. Conventionally, if at least one conditional expression which does not comply with the license is referred to in such evaluation of the license, then it is reported that an error occurs irrespective of the other conditional expressions. According to embodiments of the present invention, a cause of such an error can be specified using a simple configuration that an error code is annexed to the description of such use condition information as described above.

The conditional expression and the error code described above are a list merely referred to in a program relating to the license, and the use condition information itself in which the conditional expression or error code is described does not function as a program. Accordingly, even if an error code is added to existing use condition information, this does not alter the program itself.

The license evaluation apparatus may be configured such that the license evaluation apparatus is composed of a main module section which performs principal processes regarding a content and a plurality of sub module sections associated with the main module section, and one of the sub module sections includes at least the error code retaining section which sends, when the processing is passed from the sub module section including the error code retaining section to the main module section, the error code retained by the error code retaining section as a return value to the main module section.

In the license evaluation apparatus, a plurality of modules are prepared in accordance with various objects in order to process a content. If a request to process a content is received, then the main module section (hereinafter referred to merely as main module) passes its processing to a sub module section (hereinafter referred to simply as sub module) relating to a license in order to confirm whether or not there exists a license for the content. The sub module refers to the description of the use condition information to evaluate the conditional expression. If an error occurs with the sub module, then an error read together with the conditional expression can be referred to. If the sub module returns the error code as a return value to the main module, then also the main module can grasp the error code and can specify the substance and the position of the error without analyzing the position at which the error occurs in an ex post fact fashion.

The license evaluation apparatus may be configured such that the data storage section further stores status information representative of use states of the contents based on the licenses, the license evaluation apparatus further comprising a status information extraction section for extracting, if the license extracted by the license extraction section includes a use limitation condition, the status information corresponding to the selected content from within the data storage section, the conditional expression decision section deciding the conditional expression using the use state of the status information.

With the configuration just described, the conditional expression decision section can compare the use limitation condition of the use condition information of the license and the use state of the status information with each other to decide whether or not the license exists.

The license evaluation apparatus may be configured such that the use condition information includes a plurality of conditional expressions and a plurality of error codes individually annexed to the conditional expressions, and the error code retaining section retains error codes of all of those conditional expressions which are not satisfied by the use state. Here, the term "retains error codes" includes retention of values obtained by substitution of such error codes into error code variables.

Use limitation conditions of a license include those relating to the reproduction time, reproduction period, number of times of reproduction and so forth of a content in a unit of a status ID, and a conditional expression for each use limitation condition is described in the use condition information. A plurality of such use limitation conditions can be set, and a plurality of conditional expressions can be described in the use condition information accordingly. Further, although it is possible to define a plurality of conditional expressions independently of each other, they may otherwise be coupled by a logical AND or a logical OR. In embodiments of the present invention, an error code is applied to each condition. With the configuration, it is possible to successively evaluate all conditional expressions and specify all of those conditional expressions with which an error (a state wherein the conditional expression is not satisfied) occurs.

The license evaluation apparatus may further comprise an error notification section for issuing an error notification in response to the error code. With the configuration, the user can precisely grasp by what limitation condition the intended process of the content cannot be performed.

The license evaluation apparatus may further comprise a status information updating section for updating the status information when the content is processed by the content processing section. The updating of the status information is performed by addition, alteration or deletion of the reproduction time, reproduction period, number of times of reproduction and so forth of a content in a unit of a status ID. For example, when reproduction of a content is performed by the content processing section, the variable which defines a use state in the status information is updated.

The components of the license evaluation apparatus may be formed as apparatus of separate bodies from each other or the plurality of separate apparatus may function as the license evaluation apparatus.

According to another aspect of the present invention, there is provided a license evaluation method, comprising a content selection step of selecting a content, a license extraction step of extracting a license which corresponds to the selected content from within a data storage section, a conditional expression decision step of reading a conditional expression in use condition information of the license and an error code annexed in advance to the conditional expression and deciding whether or not the conditional expression is satisfied, a content processing step of processing the content if the conditional expression is satisfied, and an error code retaining step of retaining the error code if the conditional expression is not satisfied.

According to a further aspect of the present invention, there is provided a computer program for evaluating a license of a content, the computer program causing a computer to function as a data storage section for storing licenses of contents, a content selection section for selecting one of the contents, a license extraction section for extracting that one of the licenses which corresponds to the selected content from within the data storage section, a conditional expression decision section for reading a conditional expression in use condition information of the license and an error code annexed in advance to the conditional expression and deciding whether or not the conditional expression is satisfied, a content processing section for processing the content if the conditional expression is satisfied, and an error code retaining section for retaining the error code if the conditional expression is not satisfied.

With the license evaluation apparatus and method and the computer program, only by adding an error code to a conditional expression of use condition information, the substance of an error and the position at which the error occurs can be specified without analyzing a parameter with which the error occurs in an ex post fact fashion.

Further, addition of a new conditional expression and an error code can be performed only by adding a description of use condition information without modifying an execution program of the conditional expression decision section or the error code retaining section. Consequently, the maintenance const can be reduced significantly.

The above and other objects, features and advantages of the present invention will become apparent from the following description and the appended claims, taken in conjunction with the accompanying drawings in which like parts or elements denoted by like reference symbols.

The present invention will be described further, by way of example only, with reference to preferred embodiments thereof as illustrated in the accompanying drawings, in which:
FIG. 1 is a block diagram schematically showing a content distribution system;
FIG. 2 is a block diagram schematically showing a configuration of a license evaluation apparatus;
FIG. 3 is a diagrammatic view illustrating a relationship among a status ID, a license and status information;
FIG. 4 is a diagrammatic view illustrating a configuration of a content reproduced by the license evaluation apparatus;
FIG. 5 is a diagrammatic view illustrating a concept of an example of a configuration of attribute information;
FIG. 6 is a view illustrating an example of a configuration of a license;
FIG. 7 is a view illustrating an example of a description of product information;
FIG. 8 is a view illustrating a conventional license;
FIG. 9 is a view illustrating a description of use condition information;
FIG. 10 is a view showing a data list illustrating an example of use condition information of a license;
FIGS. 11 and 12 are schematic views each illustrating a display of an error message;
FIG. 13 is a view of a data list illustrating another example of use condition information of a license;
FIG. 14 is a view illustrating a display of another error message;
FIG. 15 is a view of a data list illustrating a further example of use condition information of a license;
FIG. 16 is a view illustrating a display of a further error message;
FIGS. 17 and 18 are views of a data list illustrating still further examples of use condition information of a license;
FIGS. 19 and 20 are views illustrating displays of still further error messages;
FIG. 21 is a flow chart illustrating a procedure of a license evaluation method; and
FIG. 22 is a flow chart illustrating a detailed procedure of a conditional expression decision step of the flow chart illustrated in FIG. 21.

When a user intends to utilize a charged content, it is necessary for the user to acquire both of the content itself and a license for utilization of the content. Recently, a system is utilized which manages such contents and licenses independently of each other. The user would freely download the content in an encrypted form from a content distribution server or the like and purchase only the license for utilization of the content separately from the content.

A use limitation condition corresponding to an amount of money paid to purchase the license is described in the license. The user cannot change the description of the use limitation condition without permission. Further, the user can utilize the content only by coordinating the content and the license with each other even if the user does not recognize the substance of encryption of the license or the content.

In the following, a relationship between such a content and a license as described above is described in connection with a content distribution system.

### Content Distribution System

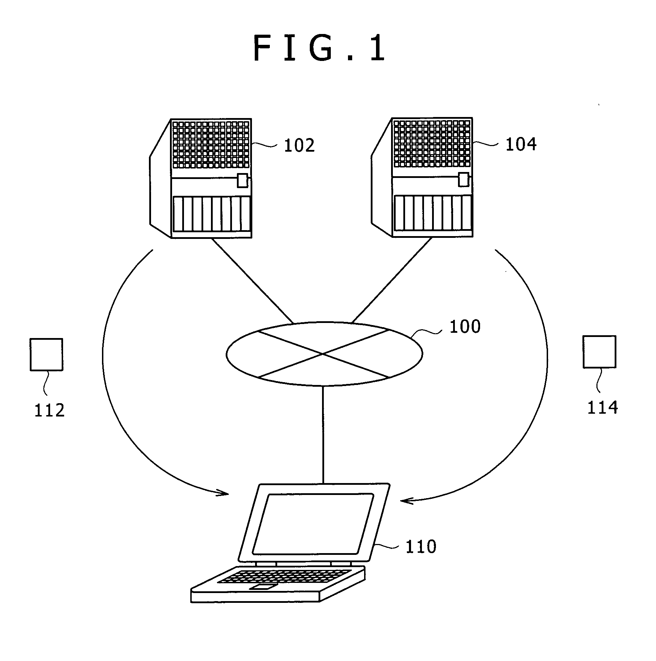

FIG. 1 schematically shows a content distribution system. Referring to FIG. 1, the content distribution system shown includes a communication network 100, a content distribution server 102, a license acquisition server 104, and a license evaluation apparatus 110.

The communication network 100 includes a network of the Internet which is a public network, and servers and various apparatus are connected to the communication network 100 through a telephone network or the like.

The content distribution server 102 stores contents 112 which can be utilized by users, and distributes a content 112 in response to a request of the license evaluation apparatus 110 or the like.

The license acquisition server 104 stores licenses 114 corresponding to the contents 112 to be distributed from the content distribution server 102 and provides a license 114 in response to a request from the license evaluation apparatus 110 or the like. However, the license 114 may be a charged license and is provided after payment of the charge by the user is confirmed by an associated accounting server not shown. The license 114 includes product information hereinafter described and refers to the product information at any time in response to a utilization form (use limitation condition) of the content.

The license evaluation apparatus 110 may be a personal computer, a PDA (Personal Digital Assistant), a mobile telephone set, a portable audio player, a home game machine, an information appliance or the like and performs distribution of a content 112 and acquisition of a license 114. Further, the license evaluation apparatus 110 changes a content 112 received from the content distribution server 102 into a state wherein it can be processed (reproduced, checked out or the like) with the license 114 acquired from the license acquisition server 104 through the communication network 100 and utilizes the content 112.

The content distribution system can handle contents and licenses independently of each other and handle a license composed of a small amount of data in a unit in dealing. License Evaluation Apparatus 110

The license evaluation apparatus 110 which composes the content distribution system is described in detail below.

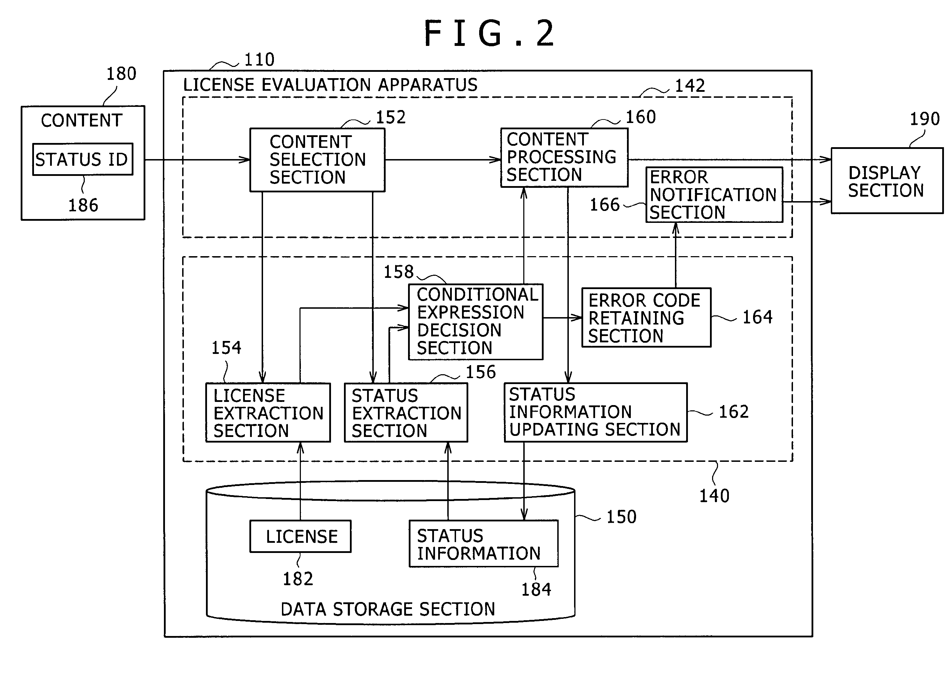

FIG. 2 schematically shows a configuration of the license evaluation apparatus 110. The license evaluation apparatus 110 can be roughly divided into different regions including a sub module (sub module section) 140 for performing a process relating to a license, a main module (main module section), and another sub module 142. The module here can be regarded as a portion of a program which is logically complete in processing of a content. The sub module 140 collectively manages processes relating to licenses, and the main module manages the sub module 140.

The license evaluation apparatus 110 includes a data storage section 150, a content selection section 152, a license extraction section 154, a status information extraction section 156, a conditional expression decision section 158, a content processing section 160, a status information updating section 162, an error code retaining section 164, and a error notification section 166.

The data storage section 150 stores licenses 182 of contents 180, and status information 184 representative of use states of the contents 180 based on the licenses 182. The licenses 182 and the status information 184 are coordinated with each other by status IDs 186 of the contents 180. The licenses 182 and the status information 184 may be stored in an encrypted form.

The content selection section 152 selects a content 180 to be utilized. Such a content 180 as just mentioned may be stored in advance in a storage medium or the data storage section 150 of the license evaluation apparatus 110 or may be read in from the content distribution server 102 or the like through a communication network such as the Internet. The content 180 here is, for example, an image, sound, a text or a composite of them.

The license extraction section 154 extracts a license 182 corresponding to a selected content 180 from within the data storage section 150. The content 180 has a status ID 186 annexed thereto which specifies a relationship between the content 180 and the license 182 and a relationship between the content 180 and the status information 184. The license extraction section 154 reads the status ID 186 from the content 180, searches the license 182 indicated by the status ID 186 and reads the license 182 as a license confirmation object.

If the license 182 has a use limitation condition, for example, if the license 182 has a use limitation in regard to the reproduction time, reproduction period, number of times of reproduction, number of times of permission of copying and number of times of checkout of a content in a unit of a status ID, then the status information extraction section 156 extracts status information 184 corresponding to the selected content 180 from within the data storage section 150. More particularly, the status information extraction section 156 reads the status ID 186 annexed to the selected content 180 from the content 180 and detects the status information 184 indicated by the status ID 186 from within the data storage section 150. On the other hand, if the license 182 does not have a use limitation condition, for example, when the content 180 can be utilized freely without any use limitation after it is purchased, then there is no necessity to extract the status information 184.

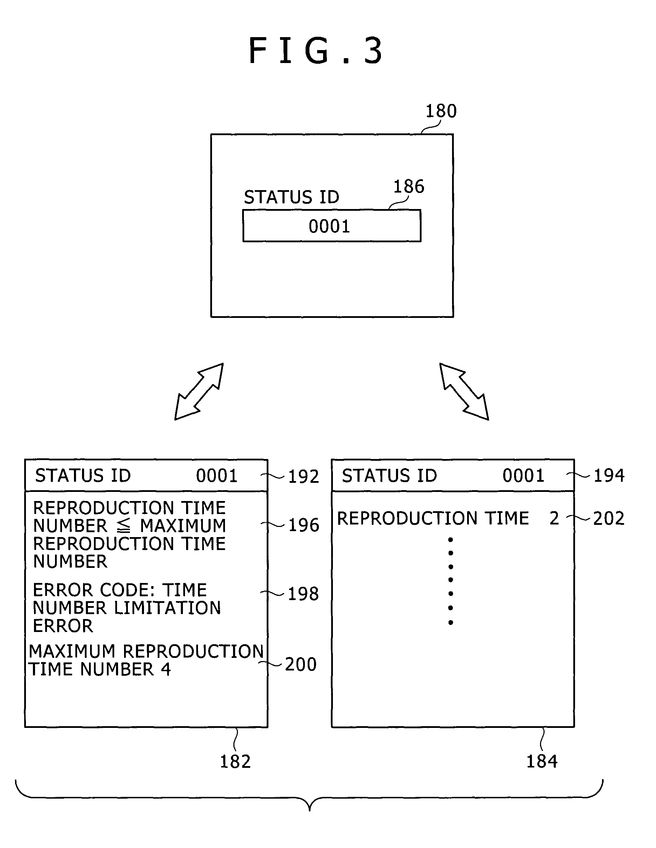

FIG. 3 illustrates a relationship of a status ID 186 applied to a content to a license 182 and status information 184. The content 180 has a status ID 186 annexed thereto. The status ID 186 can represent a utilization unit of the content. Accordingly, it is also possible to apply a status ID 186 to a subdivided content or track in the content 180. Further, the license 182 designates, in the header 192 thereof, a status ID for specifying a corresponding content. The license extraction section 154 detects a license 182 which designates the status ID 186 read from the content 180 and coordinates the content 180 and the license 182 with each other.

Similarly, the status information 184 designates, in the header 194 thereof, a status ID in order to specify a corresponding content. The status information extraction section 156 detects status information 184 which designates the status ID 186 read from the content 180 and coordinates the content 180 and the status information 184 with each other.

The conditional expression decision section 158 decides whether or not the use state of the status information 184 satisfies a conditional expression in use condition information in the license 182. In the example of FIG. 3, the license evaluation apparatus 110 first reads a description of "number of times of reproduction ≦ maximum number of times of reproduction" of a conditional expression 196 from the use condition information of the license 182 and recognizes the conditional expression 196. Further, the license evaluation apparatus 110 reads a "time number limitation error" of an error code 198 and a "maximum number of times of reproduction: 4" of a use limitation 200 from the use condition information of the license 182. Then, the license evaluation apparatus 110 reads a "number of times of reproduction: 2" which is a use state 202 of the status information 184 and applies it to the conditional expression 196 to compare the use limitation 200 and the use state 202 with each other.

If the conditional expression decision section 158 decides that the condition of the conditional expression 196 is satisfied as a result of the comparison described above, then it permits the content processing section 160 to process the content through the main module. Conventionally, when the conditional expression 196 is not satisfied, the conditional expression decision section 158 does not issue a permission of content processing to the content processing section 160 but issues a report of an "error" to the content processing section 160. In contrast, in the present embodiment, the conditional expression decision section 158 retains the error code 198 read together with the conditional expression 196 and specifies a particular substance of the error and a position at which the error occurs. For example, in FIG. 3, it can be specified that the error relates to the time number limitation, and also the position and so forth of the conditional expression 196 can be specified.

If the conditional expression decision section 158 permits processing of the content 180, that is, when it is decided that the use state based on the status information 184 satisfies the conditional expression 196, then the content processing section 160 processes the content 180, for example, uses a display section 190 to reproduce the content 180. Such reproduction of the content 180 is performed in conformity with a reproduction rule therefor, and tracks which form the content 180 and so forth are reproduced in an overlapping relationship or simultaneously. Further, depending upon the content, a rule of reproducing extracted (selected) tracks successively without any overlap between them is applied, and the "in an overlapping relationship or simultaneously" does not exclude such a reproduction rule as just described.

The status information updating section 162 updates the status information 184 in response to a process of the content 180 by the content processing section 160. Such updating is performed by addition, alteration or deletion of reproduction time, a reproduction period, a number of times of reproduction, a number of times of permission of copying and a number of times of checkout of a content or a track in a unit of a status ID.

If the conditional expression decision section 158 decides that the use state of the status information 184 satisfies the conditional expression 196, then the error code retaining section 164 retains the error code 198 annexed in advance to the conditional expression 196. Such retention of the error code 198 includes processing of writing into an error code variable and so forth. Further, when a process relating to a license is completed once and the processing is passed from the sub module 140 to the main module, it is possible to return such an error code 198 as a return value to the sub module 140. By retaining or transmitting the error code 198 in this manner, a relationship of the error can be specified by analyzing the error in an ex post facto fashion.

The error notification section 166 issues a notification of an error in response to the error code 198 from the error code retaining section 164. The notification of the error may be performed using an error lamp or warning sound from the license evaluation apparatus 110 or may be a display of the detailed substance of the error by the display section 190.

Also a computer program for causing a computer to function as the components described above is provided.

In the following, the content 180, license 182 and status information 184 are described in detail. Content 180

Where a charged content is to be utilized, the contents is managed by a copyright management system technique or the like. More particularly, the copyright management system sets a license to the content and permits a legal user (user who pays a reasonable consideration for the copyright of a content to purchase its license and utilizes the contents within a range of private use) to utilize the content comparatively freely. On the other hand, the copyright management system strictly limits utilization of the content by a user who conducts illegal utilization such as an act to distribute a content by a great amount through the Internet or the like or a user who tries to utilize a content exceeding a range of the license without paying a reasonable consideration.

In the copyright management system, an application for reproducing a content performs communication and management of the content, right data and so forth through a DRM (Digital Right Management) module corresponding to the sub module 140 regarding the license. The license and status information associated with the content are controlled by the DRM module.

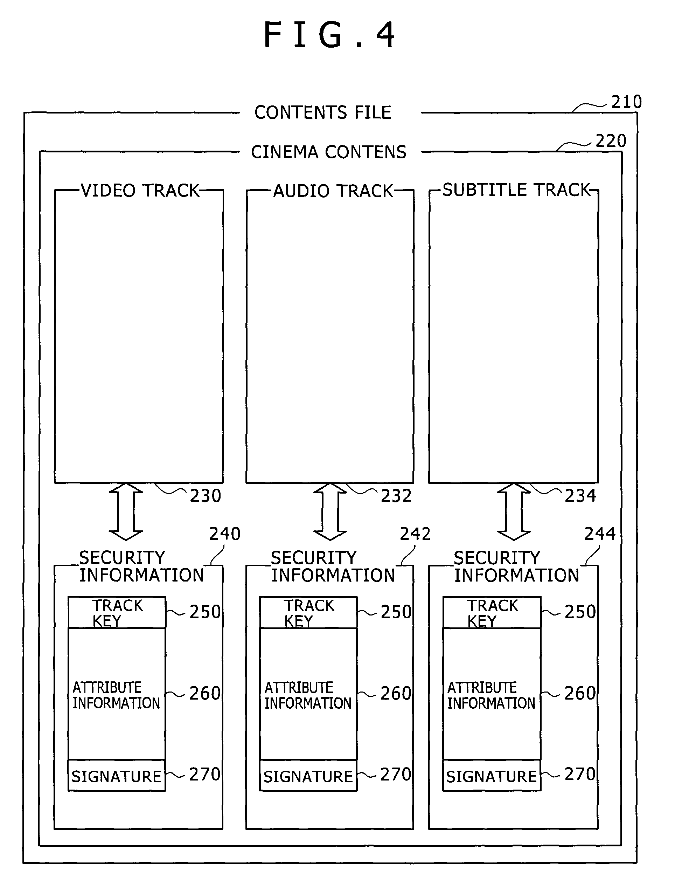

FIG. 4 illustrates a configuration of a content reproduced by the license evaluation apparatus according to the present embodiment. Here, description is given taking an example of a configuration of a cinema content into consideration.

As seen in FIG. 4, one cinema content 220 is included in one content file 210. The cinema content 220 includes, for example, a video track 230, an audio track 232, a subtitle track 234, and security information 240, 242 and 244 corresponding to the tracks 230, 232 and 234, respectively.

The tracks included in the cinema content 220 are components of the content and data representing the actual substance of the content. The number of tracks which form one content differs among different contents, and in the example of FIG. 4, the content shown is formed from three tracks 230, 232 and 234. Of the three tracks 230, 232 and 234, the video track 230 includes video data which are moving picture data corresponding to images of a cinema. Meanwhile, the audio track 232 includes audio data corresponding to sound of the cinema. Further, the subtitle track 234 includes subtitle data of the cinema. The tracks 230, 232 and 234 are in a form wherein they are encrypted with a track key 250 included in corresponding security information.

It is to be noted that the content may be formed only from one of the video track 230, audio track 232 and subtitle track 234, or may include some other track such as, for example, a still picture track or a character information track relating to music.

The security information 240, 242 and 244 is information (SINF: Security Information) for performing copyright management of the content and is added for each track, for example, by the license evaluation apparatus 110 or the contents distribution server 102 or the like connected to the license evaluation apparatus 110 through the communication network. In the example of FIG. 4, three pieces 240, 242 and 244 of security information are added to the three tracks 230, 232 and 234 in the one cinema content 220, respectively. It is to be noted that, while, in the present embodiment, security information is provided in a unit of a track in this manner, the provision of security information is not limited to this, and for example, where license management in a unit of a track is not performed, security information may be provided in a unit of a content.

The security information includes, for example, a track key 250, attribute information 260 and a signature 270 all in an encrypted form.

The track key 250 is a key for decrypting (decoding) each track which is in an encrypted form. The track key 250 of the security information 240 is a key for decrypting the video track 230, and the track key 250 of the security information 242 is a key for decrypting the audio track 232. The track key 250 of the security information 244 is a key for decrypting the subtitle track 234. Further, also such track keys themselves are in an encrypted form. Accordingly, if an appropriate license is not available, then a track key cannot be decrypted, and as a result, it is impossible to decrypt and reproduce content data of the track.

The attribute information 260 is information representative of attributes of the content and includes a plurality of content attribute IDs hereinafter described. The status ID described hereinabove is included in the content attribute ID. The attributes of the content include not only natures and characteristics (for example, a status, a file, a track and so forth) concerning copyright management of the contents but also natures, characteristics (for example, the director, a leading actor or actress and so forth of the content) concerning the substance of the content. In the present embodiment, the attribute information 260 is determined for each of tracks which form the content and represents attributes of the tracks which form the content. Therefore, even in the same cinema content 220, the attribute information 260 annexed to a different track may be different information. The attribute information 260 annexed to the content in this manner is utilized to establish matching between the content and a license. Such attribute information 260 includes, for example, an attribute code and a content attribute ID.

The signature 270 is a digital signature annexed by the license evaluation apparatus 110 or the content distribution server 102 or the like connected to the license evaluation apparatus 110 through the communication network 100, and has a function of preventing falsification of the entire security information. The signature 270 includes, for example, also a certificate for verifying the validity of the digital signature.

Now, the attribute information 260 according to the present embodiment is described in detail.

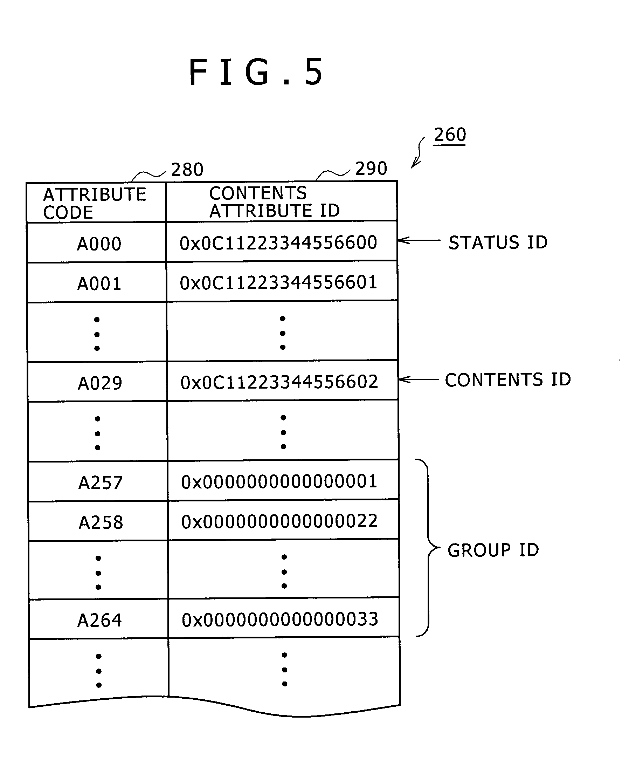

FIG. 5 illustrates a concept of an example of a configuration of the attribute information 260 according to the present embodiment. Referring to FIG. 5, the attribute information 260 includes attribute codes 280 and content attribute IDs 290 corresponding to the attribute codes.

As described hereinabove, the attribute information 260 is information representative of attributes of the track. The attribute information 260 is set, for each content, by the license evaluation apparatus 110 or the content distribution server 102 or the like connected to the license evaluation apparatus 110 through the communication network 100 and annexed in securing information corresponding to the track.

Each attribute code 280 is an identification code for identifying the type of an attribute of the content. The attribute code 280 is a code determined commonly for each type of an attribute of the content, for example, in the copyright management system irrespective of whether or not the content to which the attribute information 260 is annexed is different or same. The attribute code is formed from a character string of four characters such as, for example, "A000". In the present embodiment, for example, 1,000 different attribute codes from "A000" to "A999" can be set, and consequently, 1,000 different attributes can be defined.

Each content attribute ID 290 is an ID for specifying an attribute of the content. The content attribute ID 290 is formed from a unique character string (in the example of FIG. 5, a character string of 14 characters) for each attribute of the content and uniquely specifies the attribute of the content to which the content attribute ID is annexed. A plurality of different content attribute IDs 290 are set for each type (attribute code described hereinabove) of an attribute of the content. In the following, the content attribute IDs are described individually.

The content attribute ID whose attribute code is "A000" is a status ID. The status ID is an ID annexed uniquely in a unit of a track or a content to which a license is applied. The track or content to which a license is applied is a set of data significant as an object of copyright management wherein a license is used. By annexing the status ID to a content, the content to which a license is applied and which is circulated in the system can be identified.

Here, a manager (service provider) who manages contents can freely determine a unit to which a status ID is to be annexed (that is, a unit of a content or a track to which a license is applied) in various forms.

For example, such a status ID as described above may be annexed in such a manner that the same status ID is annexed to a plurality of tracks or annexed in a unit of a content. Also it is possible to annex the same status ID to a plurality of tracks across different contents. In this instance, status information according to individual combinations is associated with each other, and licenses are applied in response to the status information.

The content attribute ID whose attribute code is, for example, "A029" is a content ID (also called file ID). This content ID is annexed uniquely in a unit of a content file including one, two or more tracks. For example, in the example of FIG. 4, one file ID is annexed to the content file 210 including one cinema content 220. By applying such a content ID as described above to a content, a file of a content which is circulated in the system can be identified.

The eight content attribute IDs having attribute codes of, for example, "A257" to "A264" are group IDs. The group IDs are annexed uniquely in a unit of a common attribute which is an attribute common to a plurality of contents. A plurality of different group IDs are set corresponding to a plurality of common attributes. The common attributes represented by the group IDs can be set freely by the manager (service provider) of the content distribution server 102.

As described hereinabove, a license and status information are associated with such a status ID as described above. The DRM module of the license evaluation apparatus 110 first reads in security information corresponding to a designated track and extracts a status ID from the attribute information 260 in the security information. Furthermore, the DRM module refers to the license associated with the status ID and, if necessary, further refers to the status information to confirm whether or not the substance of the status information is within the limitation of the license.

After the conditional expression decision section 158 completes confirmation of the license, the track designated with the track key 250 in the security information is decoded and placed into a reproducible state. License 182

If the user intends to utilize a content using the license evaluation apparatus 110, then the user must acquire a license from the license acquisition server 104 in advance together with the content. The license includes a leaf ID for specifying the user or the license evaluation apparatus 110 and a use limitation condition and so forth of the content.

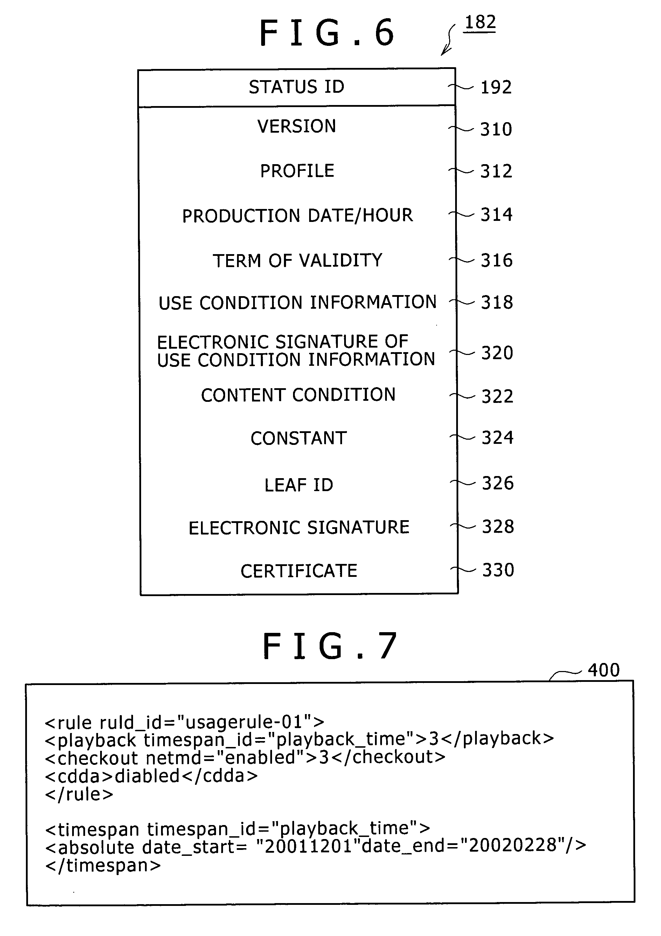

FIG. 6 illustrates an example of a configuration of a license in the present embodiment. Referring to FIG. 6, the license 182 illustrated includes a header 192, a version 310, a profile 312, a production date/hour 314, a term of validity 316, use condition information 318, an electronic signature of use condition information 320 of use condition information, a content condition 322, a constant 324, a leaf ID 326, an electronic signature 328, and a certificate 330.

A status ID in the header 192 specifies a relationship between the content 180 and a license 182 and a relationship between the content 180 and status information 184. Accordingly, the license extraction section 154 coordinates the license 182 and the content 180 with each other by comparing the status ID 186 read from the content 180 and the status ID described in the header of the license 182 in the data storage section 150 with each other.

The version 310 represents a version of the license 182 and describes a major version and minor versions juxtaposed successively.

The profile 312 is information which defines a limitation to the describing method of the license 182 and is described in an integer value.

The production date/hour 314 describes the date and hour at which the license 182 is set, that is, the date and hour of production of the license 182.

The term of validity 316 indicates a term of validity of the license 182 and is normally described in year, month, day and hour represented in the Christian Era. When the term of validity is to be set to an unlimited term, either a mark representing this is annexed or the term of validity is set to the year of 9999, month of December, day of 31st, and hour of 23:59:59.

The use condition information 318 describes a use limitation condition to use of the content 180 based on the license 182 in the form of a list. The use limitation condition includes maximum values of the reproduction time, reproduction period, number of times of reproduction, number of times of permission of copying and number of times of checkout of a contents in a unit of a status ID, and whether or not recording on a recording medium is permitted, whether or not movement of the license is permitted, whether or not there is use log duty, and so forth. Further, the use condition information 318 describes a conditional expression, an error code and a use limitation condition.

The electronic signature of use condition information 320 is an electronic signature corresponding to the use condition information 318 and has a function of preventing falsification of the use condition information 318. The electronic signature of use condition information 320 includes, for example, a certificate for verifying the validity of the electronic signature of use condition information 320.

The content condition 322 describes a limitation relating to the content 180 to be processed.

The constant 324 describes a constant to be referred to by the use condition information 318.

The leaf ID 326 is identification information allocated to the license evaluation apparatus 110 for identifying the license evaluation apparatus 110.

The electronic signature 328 is an electronic signature corresponding to the entire license 182 and seeks to prevent falsification of the license 182.

The certificate 330 is a certificate including a public key of the license acquisition server 104.

In the present embodiment, the conditional expression and the error code described in the use condition information 318 are referred to by the conditional expression decision section 158, and if the conditional expression is not satisfied, that is, if the use limitation of the license 182 should be applied, then the substance of the error can be grasped from the error code. Status Information 184

The status information 184 is produced in a corresponding relationship to the status ID 186 which is a unit of use of the content 180. Accordingly, the status information 184 corresponds also to the license 182. However, while the license 182 defines a fixed use limitation, the status information 184 defines a use state which is updated in response to use of the content 180. Then, when the content 180 is to be used next, the use state after such updating is referred to and compared again with the license 182 to determine whether the use should be permitted or rejected.

The status information 184 includes reproduction time, a reproduction period, a number of times of reproduction, a number of times of permission of copying and a number of times of checkout of a content in a unit of a status ID written therein corresponding to the use limitation of the license 182. If an item relating to the use limitation is included in the license 182 but is not included in the status information 184, then the item is added to the status information 184 by the status information extraction section 156.

Now, in order to facilitate understanding of the license evaluation apparatus 110, this is described in more detail. Here, description is given principally of addition of a conditional expression in acquisition of the license 182 and evaluation according to the conditional expression.

If the user tries to acquire the license 182 from the license acquisition server 104, then the license acquisition server 104 first refers to the product information stored in the license acquisition server 104 to produce a license 182. The product information describes all use conditions and use limitations regarding the corresponding content 180, and some of the conditional expressions and so forth are extracted from the product information in accordance with a purchasing method of the content 180 or the amount of money paid for purchasing. Thus, a license 182 to the individual license evaluation apparatus 110 is set based on the extracted conditional expression and so forth.

FIG. 7 illustrates an example of description of product information 400. The product information 400 includes an enumeration of conditional expressions for the content 180 in the XML (Extensible Markup Language). The product information illustrated in FIG. 7 includes use limitation conditions of the number of times of reproduction: 3, the number of times of checkout: 3, the starting date of reproduction: December 1, 2001, and the ending date of reproduction: February 28, 2002.

In order to produce a license 182 from the product information 400, for example, those use conditions for permission only of the content 180 are selected in response to utilization conditions of the user. In this instance, those items (conditional expressions and use limitation conditions) relating to reproduction of the content 180 are divided from the rule part of the product information 400. For example, the use limitation conditions of the starting date of reproduction, ending date of reproduction and number of times of checkout are divided to the license 182 and imposed on the license evaluation apparatus 110.

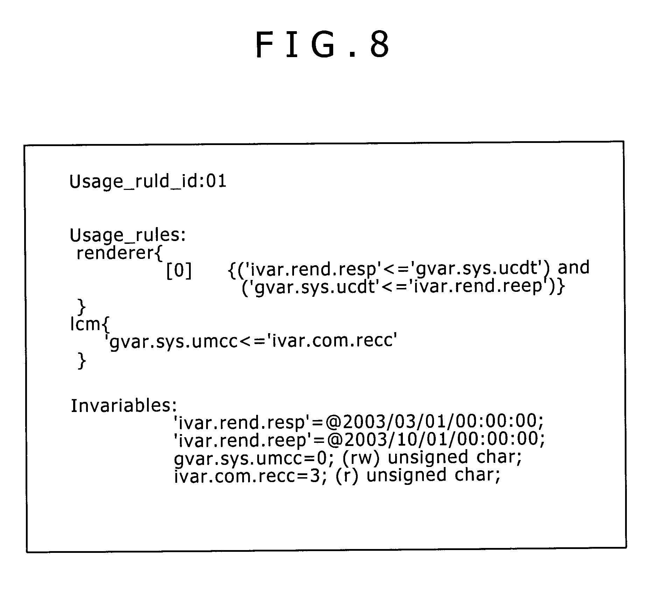

FIG. 8 illustrates a conventional license 182 divided from the product information 400 as described above. The description illustrated in FIG. 8 is described in the use condition information in the license 182 and represented as Usage_rules. In the conditional expression "('ivar.rend.resp'<='gvar.sys.ucdt')and('gvar.sys.ucdt'<= 'ivar.rend.reep')", "'ivar.rend.resp'" and "'ivar.rend.reep'" are variables representative of use limitation conditions at initial values given at a lower portion in FIG. 8, and "'gvar.sys.ucdt'" is a variable representative of a use state of the status information 184. Here, it is evaluated whether or not the use state "'gvar.sys.ucdt'" (time upon use) satisfies the conditional expression, that is, whether the time upon use is later than the reproduction starting date but earlier than the reproduction ending date. Such a description as just described is a mere list in which data are described, and the conditional expression decision section 158 refers to and evaluates such a conditional expression as described above using a separate program for evaluating a license.

Further, in the license 182 of FIG. 8, also the number of times of checkout is evaluated and managed with the conditional expression "'gvar.sys.umcc'<'ivar.comrecc'".

In such conventional evaluation of a license as just described, the DRM module cannot recognize the significance of "'ivar.rend.resp'" or "'gvar.sys.ucdt'", but performs only comparison arithmetic operation. Accordingly, the DRM module returns variables used in a conditional expression with which an error occurs as a return value to the main module, and the application analyzes the plurality of variables. However, it is difficult for the application to grasp the error definitely since the application cannot determine under what conditions the variables are evaluated.

Such use condition information is formed from a description decided to some degree.

The use limitation condition can define the reproduction time, reproduction period, number of times of reproduction, number of times of permission of copying, number of times of checkout and so forth of a content in a unit of a status ID. As a basic describing method, a conditional expression is described for each domain, that is, for each category of the form of utilization of a content.

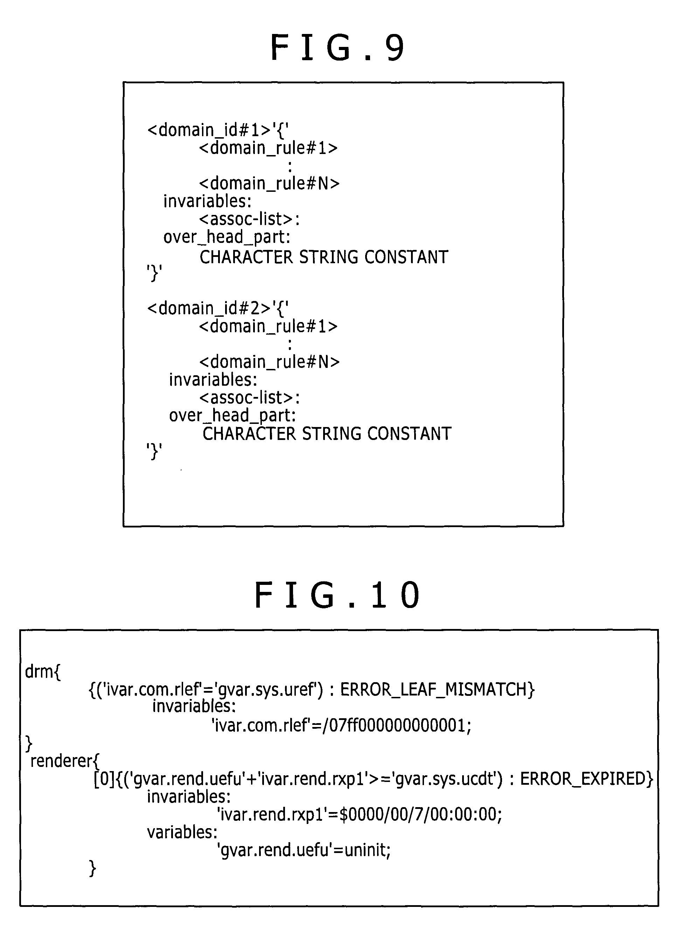

FIG. 9 illustrates a description of individual pieces of use condition information. One piece of use condition information (Usage Rule) defines a domain to which it is applied with domain_id which is described at the top thereof. Various rules are defined in the succeeding "'{'···'}'", and within the frame, three sections of a rule section, an invariables section and an overhead part section are defined.

The rule section can describe a plurality of domain_rules in the frame. The invariables section is described following the rule section and defines variables. The overhead part section follows the invariables section and describes a unique rule for each domain.

The domain_id is a name representative of the domain and is one of character strings of "drm", "renderer", "ripper", "burner" and "lcm".

The drm domain represents a category of all use forms (corresponding to the DRM module described hereinabove). The renderer domain represents a category of a utilization of a content such as reproduction or display. The ripper domain represents a category of a utilization form of reading out of a content of a CD. The burner domain represents a category of a utilization form of recording of a content on a CD-R.

A conditional expression described in the rule section is a result of comparison arithmetic operation performed for a Chars Code (CC) for referring to status variables, constants and so forth of the domains.

Available operators are "!" as a monadic operator and "=", "<", ">", "<=", ">=", "in", "and" and "or" as dyadic operators. In the array of the dyadic operators above, any dyadic operator on the left side is higher in priority in arithmetic operation. Any operator is a left-coupled operator.

The invariables section is a part in which various constants are to be described and defines a value in the Chars Code in the form of "Chars Code = value;".

Several particular forms of use condition information based on the description described above are described. From the following detailed description, addition of an error code which is a characteristic of the present invention can be grasped precisely.

FIG. 10 illustrates a data list of an example of use condition information of the license 182. Here, authentication of a license of a use limitation and utilization within a reproduction period are evaluated in the drm domain and the renderer domain, respectively.

The conditional expression described on the upper side in FIG. 10 is "'ivar.com.rlef'='gvar.sys.uref'", and a predetermined value /07ff000000000001 which is an ID of a terminal to which utilization is permitted by a license is substituted into the variable 'ivar.com.rlef'. The rlef indicates the leaf ID described hereinabove. Here, the DRM module reads in a terminal ID managed by a source, and the conditional expression decision section 158 decides whether or not the values of them coincide with each other. If they coincide with each other, then the conditional expression decision section 158 ends the conditional expression decision and starts evaluation of the expression on the lower side in FIG. 10. In this manner, the license evaluation apparatus 110 successively reads in conditional expressions from the use condition information of the license 182 and evaluates the conditional expressions in the order read in this manner.

On the other hand, if the value of the conditional expression does not exhibit coincidence, then an error code "ERROR_LEAF_MISMATCH" read in together with the conditional expression is retained and returned as a return value of the sub module to the main module. Then, the main module reads out the substance of the error from the error table for error codes and issues an error notification through the display section or the like.

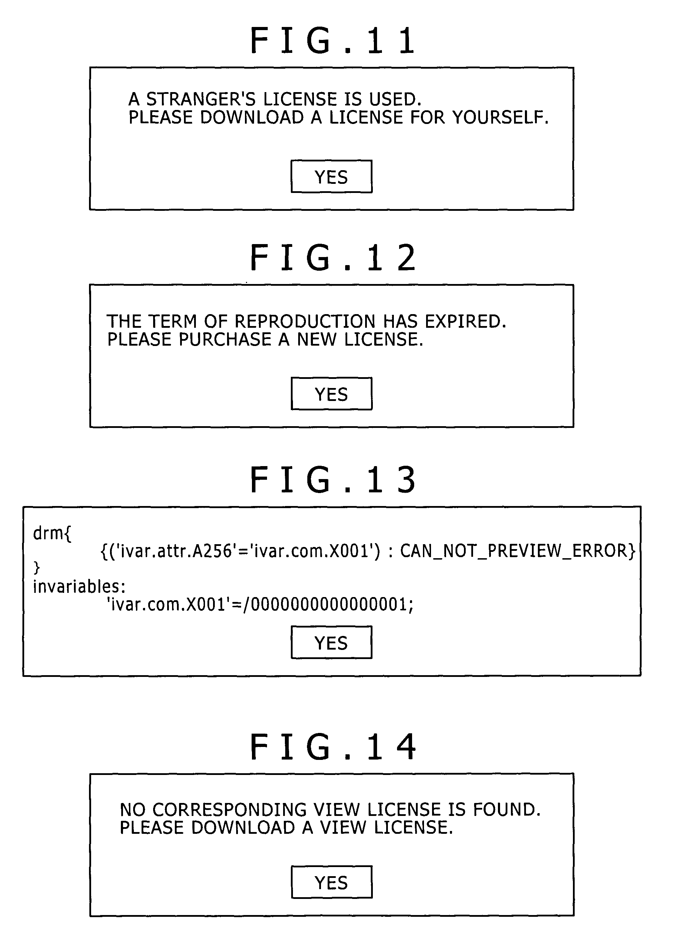

FIG. 11 shows an appearance of the display section on which an error message is displayed. Where the ID of the license evaluation apparatus 110 and the ID indicated by the license are different from each other as described above, it is decided that illegal utilization is intended, and a warning of "A stranger's license is used. Please download a license for yourself." is displayed.

Similarly, the conditional expression described on the lower side in FIG. 10 is "'gvar.rend.uefu'+'ivar.rend.rxp1'>='gvar.sys.ucdt'", and in 'ivar.rend.rxp1', a predetermined period (in the present embodiment, seven days) is described together with the conditional expression. Here, into the variable 'gvar.rend.uefu', the time at which the content is utilized for the first time is read. However, the value itself of the time is stored in the status information 184. The conditional expression decision section 158 adds the license period 'ivar.rend.rxp1' to the time 'gvar.rend.uefu' at which the content is utilized for the first time and decides that a result of the addition indicates time later than the time at which the content is to be utilized. If the conditional expression is satisfied, then the confirmation of the license 182 is completed and the license evaluation apparatus 110 performs a next process.

However, if the conditional expression is not satisfied, then an error code "ERROR_EXPIRED" read in together with the conditional expression is maintained and returned as a return value of the sub module to the main module. Then, the main module reads out the substance of the error from the error table for error codes and issues an error notification through the display section or the like.

FIG. 12 shows an appearance of the display section on which another error message is displayed. The license 182 described above permits the content 180 to be utilized for seven days from the time at which the content 180 is utilized for the first time. When the utilization permission time elapses, a warning of "The term of reproduction has expired. Please purchase a new license." is displayed.

FIG. 13 illustrates a data list of an example of use condition information of the license 182. Here, whether or not there exists a view license defining a use limitation condition is evaluated in the drm domain.

A conditional expression described in FIG. 13 is "'ivar.attr.A256'='ivar.com.X001'", and in 'ivar.com.X001', a value (in the present embodiment, /0000000000000001) of Preview used by the license 182 is described together with the conditional expression. Here, the conditional expression decision section 158 reads the value of the attribute code A256 in the attribute information in the security information of the content associated with the license into a variable 'ivar.attr.A256'. The conditional expression decision section 158 decides whether or not the values of both of them coincide with each other. If they coincide with each other, then the confirmation of the license 182 is completed.

On the other hand, if the two values do not coincide with each other, an error code "CAN_NOT_PREVIEW_ERROR" is retained and returned as a return value of the sub module to the main module. Then, the main module reads out the substance of the error from the error table for error codes and issues an error notification through the display section or the like.

FIG. 14 shows an appearance of the display section on which a further error message is displayed. The license 182 described above does not permit the Preview to be viewed, a warning of "No corresponding view license is found. Please download a view license." is displayed.

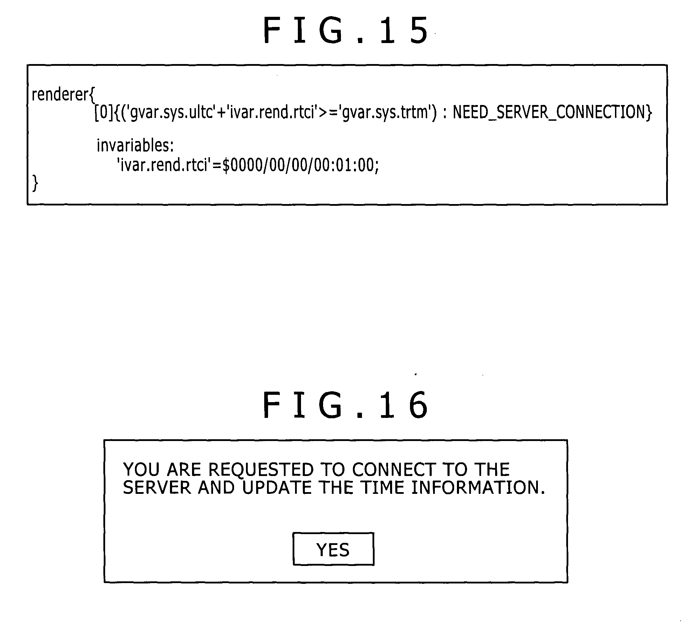

FIG. 15 illustrates a data list of an example of use condition information of the license 182. Here, whether or not periodical updating to the license acquisition server 104 which is a use limitation condition is evaluated in the renderer domain.

A conditional expression described in FIG. 15 is "'gvar.sys.ultc'+'ivar.rend.rtci'>'gvar.sys.trtm'", and in 'ivar.rend.rtci', a minimum period (in the present embodiment, 1 minute) within which accessing to the license acquisition server 104 should be performed is described together with the conditional expression. Here, time at which connection is established last to the license acquisition server 104 is written in the variable 'gvar.sys.ultc'. However, the value itself of the time is stored in the status information 184 associated with the license 182. The conditional expression decision section 158 adds the access minimum period 'ivar.rend.rtci' to the time 'gvar.sys.ultc' at which the license acquisition server 104 is accessed last and decides that a result of the addition indicates time later than the content utilization time. If the conditional expression is satisfied, then the confirmation of the license 182 is completed.

On the other hand, if the conditional expression is not satisfied, then an error code "NEED_SERVER_CONNECTION" is retained and returned as a return value of the sub module to the main module. Then, the main module reads out the substance of the error from the error table for error codes and issues an error notification through the display section or the like.

FIG. 16 shows an appearance of the display section on which a further error message is displayed. Since the license 182 requires a request for accessing to the license acquisition server 104 to be issued periodically, a warning of "You are requested to connect to the server and update the time information." is displayed.

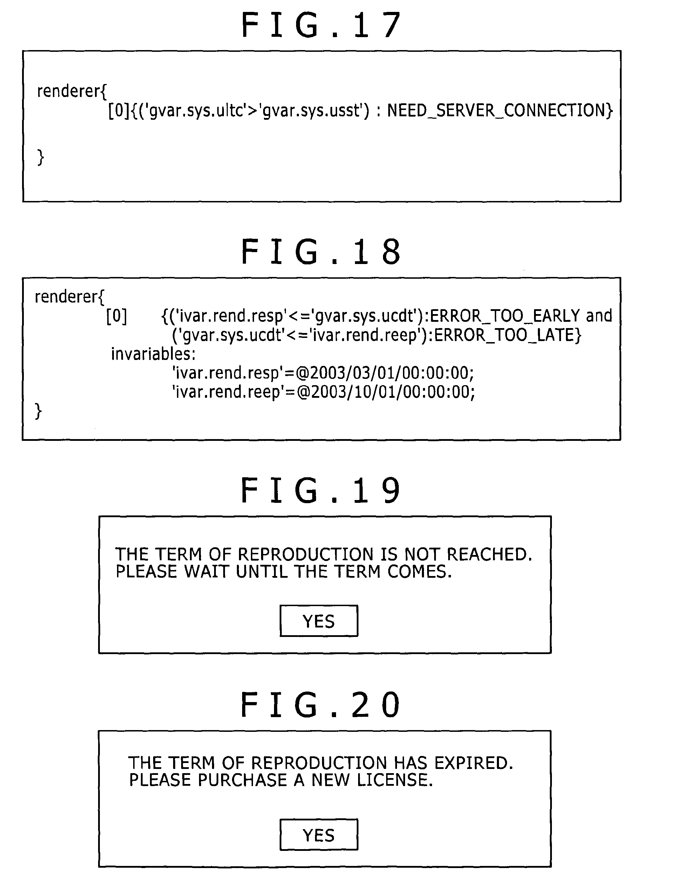

FIG. 17 illustrates a data list of an example of use condition information of the license 182. Here, whether or not periodical updating to the license acquisition server 104 which is a use limitation condition is performed is evaluated in the renderer domain.

A conditional expression described in FIG. 17 is "'gvar.sys.ultc'>'gvar.sys.usst'", and the license 182 does not have a constant. Time at which an application including the DRM module is activated is written into the variable 'gvar.sys.usst', and time at which the license acquisition server 104 is accessed last is written into the variable 'gvar.sys.ultc'. The conditional expression decision section 158 compares the time 'gvar.sys.ultc' at which the license acquisition server 104 is accessed last and the activation time 'gvar.sys.usst' of the application with each other to decide that accessing to the license acquisition server 104 is performed later than the activation time of the application. If the conditional expression is satisfied, then the confirmation of the license 182 is completed.

On the other hand, if the conditional expression is not satisfied, then an error code "NEED_SERVER_CONNECTION" is retained and returned as a return value of the sub module to the main module. Then, the main module reads out the substance of the error from the error table for error codes and issues an error notification through the display section or the like. At this time, the error message illustrated in FIG. 16 is displayed similarly as in the case of FIG. 15.

Now, an error notification where a plurality of conditional expressions are described parallelly in use condition information is described.

FIG. 18 illustrates a data list of an example of use condition information of the license 182. Here, utilization within a fixed period which is a use limitation condition is evaluated in the renderer domain. A conditional expression described in FIG. 18 includes two conditions of "'ivar.rend.resp'<='gvar.sys.ucdt'" and 'gvar.sys.ucdt'<='ivar.rend.reep'", and the two conditions are coupled by the logical AND. Accordingly, the content can be utilized only where the two conditions are satisfied simultaneously. The "'ivar.rend.resp'" and "'ivar.rend.reep'" are described as constants in the license 182, and the 'ivar.rend.resp' indicates the starting term designated by the license 182, and the 'ivar.rend.reep' indicates the ending term designated by the license 182. Here, the variable 'gvar.sys.ucdt' indicates the time at present, and the conditional expression decision section 158 decides that the time at present is later than the starting term and earlier than the ending term. If the conditional expression is satisfied, then the confirmation of the license 182 is completed.

On the other hand, if one of the two conditional expressions is not satisfied, then an error code "ERROR_TOO_EARLY" or "ERROR_TOO_LATE" is retained and returned as a return value of the sub module to the main module. Then, the main module reads out the substance of the error from the error table for error codes and issues an error notification through the display section or the like.

FIGS. 19 and 20 show appearances of the display section on which yet further error messages are displayed. When the utilization described above is not included in the period defined in the license 182, if the starting term is not reached as yet, then a warning of "The term of reproduction is not reached. Please wait until the term comes." is displayed as seen in FIG. 19. On the other hand, if the ending term is not passed, then a warning of "The term of reproduction has expired. Please purchase a new license." is displayed as seen in FIG. 20.

In the present embodiment, specification of an error has been described for each decision of a conditional expression. However, if a plurality of errors appear simultaneously, a plurality of error codes corresponding to the plurality of errors can be retained simultaneously and can be returned as return values to the main module after all conditional expression decisions are completed. Accordingly, although conventionally the main module can decide only that an error occurs, according to the present embodiment, the main module can grasp a cause of an error with certainty.

### License Evaluation Method

Now, a license evaluation method of performing evaluation of a license of a content when a user wants to utilize the content is described.

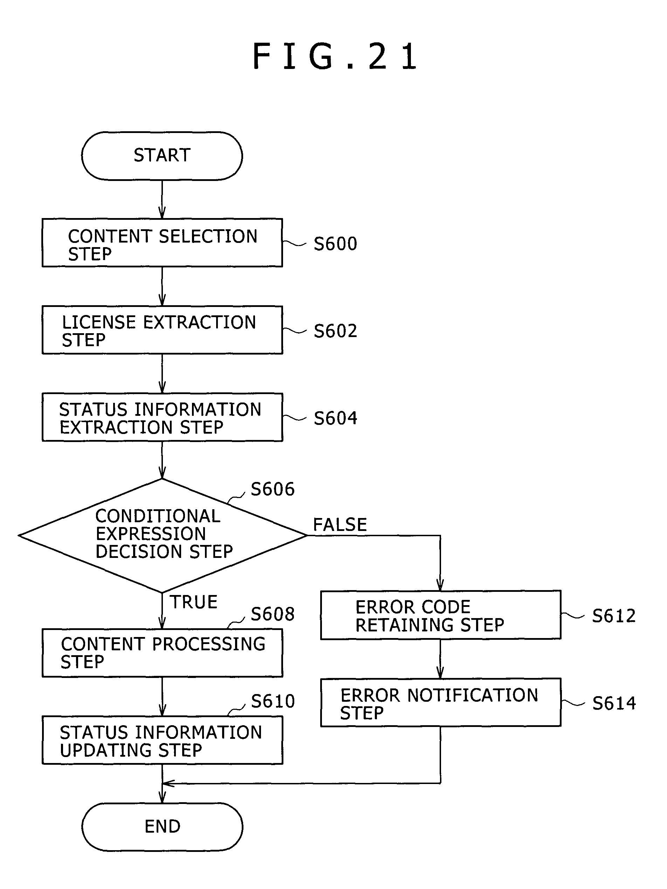

FIG. 21 illustrates a procedure of the license evaluation method. Referring to FIG. 21, the license evaluation apparatus 110 first selects a content to be processed in response to a desired operation of the user (S600). The application (main module) of the license evaluation apparatus 110 passes processing to the DRM module which performs confirmation of whether or not there exits a license. The DRM module extracts a license corresponding to the content selected at the content selection step (S600) from within the data storage section (S602).

The DRM module confirms whether or not the extracted license includes a use limitation condition and extracts, if the license includes a use limitation condition, status information representative of a use state of the selected content based on the license corresponding to the content from within the data storage section (S604). If the license does not include any use limitation condition, then the status information extraction step (S604) can be omitted.

Here, the DRM module reads a conditional expression in the use condition information of the license and the error code assigned to the conditional expression in advance and decides whether or not the use state of the extracted status information satisfies the conditional expression (S606). It is to be noted, however, that the use state of the status information is not necessarily referred to by such a conditional expression as described above, and only a use limitation condition which does not use a use state in the past, for example, only time at which the content should be utilized or the like, may be referred to.

If the use state of the status information or some other cited value regarding a use limitation satisfies the conditional expression referred to by the use condition information at the conditional expression decision step (S606), then the DRM module issues a permission of the content by the license to the application, and the application performs processing (reproduction, checkout or the like) of the content selected at the content selection step (S600) (S608). Further, the DRM module updates the status information extracted at the status information extraction step (S604) in response to the processing of the content at the content processing step (S608) (S610). Such updating of the status information may include alteration of the reproduction period or the reproduction time, incrementing of the number of times of reproduction or checkout or the like.

On the other hand, if the use state of the status information or some other cited value regarding the use limitation condition does not satisfy the conditional expression referred to by the use condition information at the conditional expression decision step (S606), then an error code referred to together with the conditional expression at the conditional expression decision step (S606) is retained (S612). Then, when the processing is passed to the application, all error codes corresponding to the use limitation conditions which are not satisfied are passed as return values to the application. The application issues an error notification in response to the error code or codes so that, for example, a warning of a GUI (Graphical User Interface) relating to the error or errors is displayed on the display section (S614).

Now, a processing procedure by the DRM module is described particularly. A conditional expression and an error code of use condition information are a list merely referred to in processing of the DRM module, and the use condition information itself does not function as a program. Accordingly, even if an error code is added to existing use condition information, there is no problem because it does not alter the program itself of the DRM module.

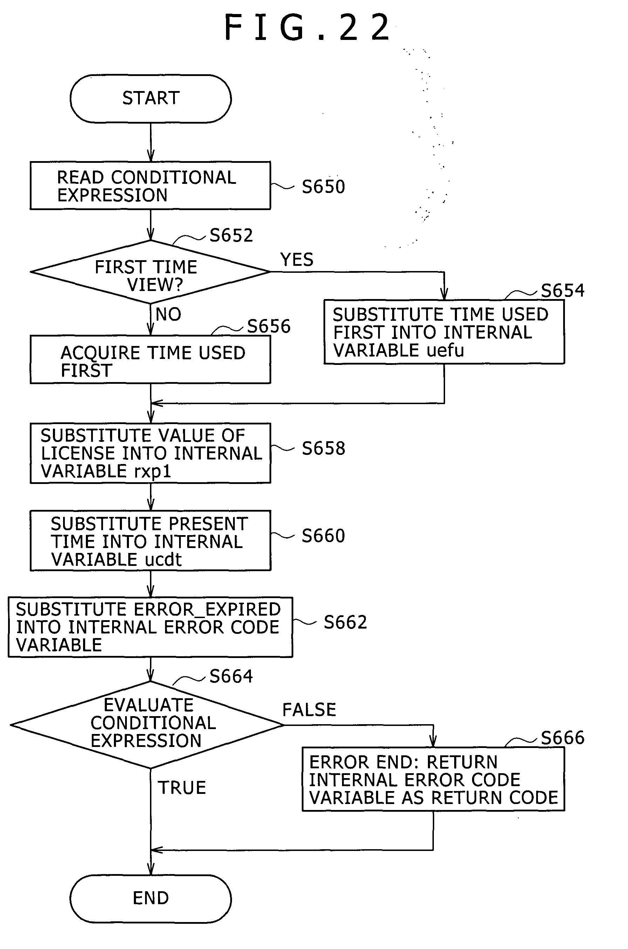

FIG. 22 illustrates a detailed procedure of the conditional expression decision step (S606) described above. In the procedure, the conditional expression illustrated on the lower side in FIG. 10 is referred to to confirm whether or not the utilization is within the reproduction period. First, the DRM module reads the conditional expression 'gvar.rend.uefu'+'ivar.rend.rxp1'>='gvar.sys.ucdt'" and the error code "ERROR_EXPIRED" from the use condition information of the license (S650). Then, it is confirmed whether or not the current reproduction of the content is the first time reproduction, that is, the first time view (S652). If it is decided that the current reproduction is the first time view, then the DRM module produces the variable 'gvar.rend.uefu' indicative of the time at which the content is utilized for the first time and substitutes the first utilization time of the content, that is, the time at present, into the status information (S654). However, if the current reproduction is not the first time view, then since the variable 'gvar.rend.uefu' is produced already, the DRM module reads out the variable 'gvar.rend.uefu' from the status information to acquire the time of the first time utilization (S656).

The DRM module substitutes a fixed value of the license period described in the license into the internal variable 'ivar.rend.rxp1' in the conditional expression (S658) and further substitutes the time at present into the other internal variable 'gvar.sys.ucdt' (S660). At this time, the DRM module substitutes also the error code "ERROR_EXPIRED" read from the use condition information of the license into the error code variable (S662). Thereafter, the DRM module evaluates the conditional expression in which the variables described above are substituted (S664). If the conditional expression is satisfied, then a normal ending process is performed, but if the conditional expression is not satisfied, then an error ending process is performed (S666). In the error ending process (S666), the error code substituted in the error code variable is passed as a return code from the DRM module to the application.

By the license evaluation method wherein the application receives an error report, the application need not trace to find out of what item the error is, and can specify a cause of an error only if it confirms an error code received as a return value.

While a preferred embodiment of the present invention has been described above with reference to the accompanying drawings, naturally the present invention is not limited to the embodiment. It is apparent that a person skilled in the art could have made various alterations or modifications without departing from the spirit and scope of the invention as defined in claims, and it is understood that also such alterations and modifications naturally fall within the technical scope of the present invention.

While, in the embodiment described above, the substance and the position of an error are specified by an error code of use condition information of a license, the description can be adapted not only to such an instance as described above but also to various utilization forms such as where it is desired to acquire some information depending upon a decision of a conditional expression of use condition information.

It is to be noted that, while, in the embodiment described above, the sub module utilizes a return value when it passes an error code to the main module, such return value may not be utilized, but it is otherwise possible for the sub module to substitute an error code into a global variable and for the main module to confirm whether or not there exists an error such that an error code is referred from the global variable.

The present invention can be applied to a license evaluation apparatus, a license evaluation method and a computer program therefor by which processing of a content is carried out based on a license.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A license evaluation apparatus, comprising:
a data storage section configured to store licenses of contents;
a content selection section configured to select one of the contents;
a license extraction section configured to extract that one of the licenses which corresponds to the selected content from within said data storage section;
a conditional expression decision section configured to read a conditional expression in use condition information of the license and an error code annexed in advance to the conditional expression and deciding whether or not the conditional expression is satisfied;
a content processing section configured to process the content if the conditional expression is satisfied; and
an error code retaining section configured to retain the error code if the conditional expression is not satisfied.

2. The license evaluation apparatus according to claim 1, wherein said license evaluation apparatus is composed of a main module section which performs principal processes regarding a content and a plurality of sub module sections associated with said main module section, and one of said sub module sections includes at least said error code retaining section which sends, when the processing is passed from the sub module section including said error code retaining section to said main module section, the error code retained by said error code retaining section as a return value to said main module section.

3. The license evaluation apparatus according to claim 1, wherein said data storage section further stores status information representative of use states of the contents based on the licenses, said license evaluation apparatus further comprising a status information extraction section for extracting, if the license extracted by said license extraction section includes a use limitation condition, the status information corresponding to the selected content from within said data storage section, said conditional expression decision section deciding the conditional expression using the use state of the status information.

4. The license evaluation apparatus according to claim 1, wherein the use condition information includes a plurality of conditional expressions and a plurality of error codes individually annexed to the conditional expressions, and said error code retaining section retains error codes of all of those conditional expressions which are not satisfied by the use state.

5. The license evaluation apparatus according to claim 1, further comprising an error notification section for issuing an error notification in response to the error code.

6. The license evaluation apparatus according to claim 1, further comprising a status information updating section for updating the status information when the content is processed by said content processing section.

7. A computer program for evaluating a license of a content, said computer program causing a computer to function as:
a data storage section for storing licenses of contents;
a content selection section for selecting one of the contents;
a license extraction section for extracting that one of the licenses which corresponds to the selected content from within said data storage section;
a conditional expression decision section for reading a conditional expression in use condition information of the license and an error code annexed in advance to the conditional expression and deciding whether or not the conditional expression is satisfied;
a content processing section for processing the content if the conditional expression is satisfied; and
an error code retaining section for retaining the error code if the conditional expression is not satisfied.

8. The computer program according to claim 7, wherein said computer program is composed of a main module which performs principal processes regarding a content and a plurality of sub modules associated with said main module, and one of said sub modules functions at least as said error code retaining section which sends, when the processing is passed from the sub module which functions as said error code retaining section to said main module, the error code retained by said error code retaining section as a return value to said main module.

9. The computer program according to claim 7, wherein said data storage section further stores status information representative of use states of the contents based on the licenses, said computer further functioning as a status information extraction section for extracting, if the license extracted by said license extraction section includes a use limitation condition, the status information corresponding to the selected content from within said data storage section, said conditional expression decision section deciding the conditional expression using the use state of the status information.

10. The computer program according to claim 7, wherein the use condition information includes a plurality of conditional expressions and a plurality of error codes individually annexed to the conditional expressions, and said error code retaining section retains error codes of all of those conditional expressions which are not satisfied by the use state.

11. The computer program according to claim 7, wherein said computer further functions as an error notification section for issuing an error notification in response to the error code.

12. The computer program according to claim 7, wherein said computer further functions as a status information updating section for updating the status information when the content is processed by said content processing section.

13. A license evaluation method, comprising:
a content selection step of selecting a content;
a license extraction step of extracting a license which corresponds to the selected content from within a data storage section;
a conditional expression decision step of reading a conditional expression in use condition information of the license and an error code annexed in advance to the conditional expression and deciding whether or not the conditional expression is satisfied;
a content processing step of processing the content if the conditional expression is satisfied; and
an error code retaining step of retaining the error code if the conditional expression is not satisfied.
